# NEUE EUROPÄISCHE PATENTSCHRIFT

(11) **EP 3 198 323 B2**
(45) Veröffentlichungstag und Bekanntmachung des Hinweises auf die Entscheidung über den Einspruch: **08.03.2023**
(45) Hinweis auf die Patenterteilung: 29.01.2020
(21) Anmeldenummer: 15756911.2
(22) Anmeldetag: 31.08.2015
(51) Int. Cl.: G02B 21/00, G02B 21/08, G02B 21/36

(54) **VORRICHTUNG ZUR ABBILDUNG EINER PROBE**
DEVICE FOR IMAGING A SAMPLE
DISPOSITIF DE PROJECTION D'UN ÉCHANTILLON

(30) Priorität: 24.09.2014 DE 102014113827
(43) Veröffentlichungstag der Anmeldung: 02.08.2017
(73) Patentinhaber: Carl Zeiss Microscopy GmbH, 07745 Jena (DE)
(72) Erfinder: LIPPERT, Helmut, 07745 Jena (DE); KALKBRENNER, Thomas, 07745 Jena (DE); KLEPPE, Ingo, 07749 Jena (DE); WOLLESCHENSKY, Ralf, 07743 Jena (DE); SIEBENMORGEN, Joerg, 07743 Jena (DE)
(74) Vertreter: Gleim Petri Oehmke Patent- und Rechtsanwaltspartnerschaft mbB
(86) Internationale Anmeldenummer: PCT/EP2015/069869
(87) Internationale Veröffentlichungsnummer: WO 2016/045913

(56) Entgegenhaltungen:
- WO-A1-2008/078083
- WO-A1-2010/012980
- DE-A1-102011 000 835
- JP-A- H0 519 172
- US-A- 5 004 307
- US-A1- 2004 240 047
- DUNSBY: "Optically sectioned imaging by oblique plane microscopy", Optics Express, vol. 16, no. 25, 8 December 2008 (2008-12-08), pages 20306-20316,
- KIM et al.: "Vectorial point spread function and optical transfer function in oblique plane imaging", Optics Express, vol. 22, no. 9, 1 May 2014 (2014-05-01), pages 11140-11151,
- SIBARITA: "Deconvolution Microscopy", Advances in Biochemical Engineering, vol. 95, 2005, pages 201-243, Berlin , Heidelberg
- BOTCHERBY et al.: "An optical technique for remote focusing in microscopy", Optics Communications, vol. 281, 2008, pages 880-887, DOI: 10.1016/j.optcom.2007.10.007
- ANSELMI et al.: "Three-dimensional imaging and photostimulation by remote- focusing and holographic light patterning", PNAS, vol. 108, no. 49, 6 December 2011 (2011-12-06), pages 19504-19509, DOI: 10.1073/pnas.1109111108
- C. Dunsby, "Optically sectioned imaging by oblique plane microscopy", Proc. SPIE 7367, Advanced Microscopy Techniques, 73670H, 1. Juli 2009; doi:10.1117/12.835143
- S. Kumar et al., "High-speed 2D and 3D fluorescence microscopy of cardiac myocytes", Optics Express, Val. 19. Seiten 13839 - 13847, 18. Juli 2011
- Stellungnahme von Prof. Dr. Dunsby
- Rechnung der Einsprechenden aus dem Jahr 2010
- Broschure der Patentinhaberin aus dem Jahr 2007
- Internet Leica Microsystems, "Echtzeit-3D-Bildgebung lebender Organismen bei sub-zellulärer Auflösung" 08.11.2016, (gefunden 03.02.2022)

## Beschreibung

### Gebiet der Erfindung

Die Erfindung betrifft eine Vorrichtung zur Abbildung einer in einer Objektebene angeordneten Probe. Diese Vorrichtung umfasst ein optisches Übertragungssystem, welches einen Bereich der Probe von der Objektebene in eine Zwischenbildebene abbildet. Die Objektebene und die Zwischenbildebene schließen dabei mit einer optischen Achse des Übertragungssystems einen von 90° verschiedenen Winkel ein, das optische Übertragungssystem ist aus mehreren Linsen aufgebaut. Die Vorrichtung umfasst außerdem ein optisches Abbildungssystem mit einem Objektiv, dessen optische Achse senkrecht auf der Zwischenbildebene steht und welches auf die Zwischenbildebene fokussiert ist, so dass die Objektebene unverzerrt auf einen Detektor abbildbar ist. Schließlich umfasst die Vorrichtung auch eine Beleuchtungseinrichtung zur Beleuchtung der Probe mit einem Lichtblatt, wobei Beleuchtungslicht in der Zwischenbildebene oder in einer Pupillenebene in den Strahlengang des Übertragungssystems eingekoppelt und durch das Übertragungssystem auf die Probe gelenkt wird oder über einen separaten Beleuchtungsstrahlengang direkt in die Objektebene eingestrahlt wird. Dabei liegt das Lichtblatt im Wesentlichen in der Objektebene und legt die Richtung der Beleuchtung fest. Die Normale der Objektebene - die auch der Normalen des Lichtblattes entspricht - legt eine Detektionsrichtung fest.

### Stand der Technik

Das optische Übertragungssystem besteht aus mehreren Linsen. Es kann symmetrisch aufgebaut sein, so dass die Abbildung durch das optische Übertragungssystem mit einem Maßstab von 1:1 erfolgt. Dies ist jedoch nicht zwingend notwendig, die Abbildung kann auch vergrößert oder verkleinert erfolgen.

Eine solche Vorrichtung wird insbesondere bei der Untersuchung von biologischen Proben eingesetzt, bei der die Beleuchtung der Probe mit einem Lichtblatt, dessen Ebene die optische Achse der Detektion in einem von Null verschiedenen Winkel schneidet, erfolgt. Üblicherweise schließt dabei das Lichtblatt mit der Detektionsrichtung einen rechten Winkel ein. Mit dieser auch als SPIM (*Selective Plane Illumination Microscopy*) bezeichneten Technik lassen sich in relativ kurzer Zeit räumliche Aufnahmen auch dickerer Proben erstellen. Auf der Basis von optischen Schnitten kombiniert mit einer Relativbewegung in einer Richtung senkrecht zur Schnittebene ist eine bildliche, räumlich ausgedehnte Darstellung der Probe möglich.

Die SPIM-Technik wird bevorzugt in der Fluoreszenzmikroskopie eingesetzt, wo sie dann auch als LSFM (*Light Sheet Fluorescence Microscopy*) bezeichnet wird. Gegenüber anderen etablierten Verfahren wie der konfokalen Laser-Scanning-Mikroskopie oder der Zwei-Photonen-Mikroskopie weist die LSFM-Technik mehrere Vorzüge auf: Da die Detektion im Weitfeld erfolgen kann, lassen sich größere Probenbereiche erfassen. Darüber hinaus ist die Lichtbelastung der Proben bei diesem Verfahren am geringsten, was unter anderem die Gefahr des Ausbleichens einer Probe reduziert, da die Probe nur durch ein dünnes Lichtblatt in einem von Null verschiedenen Winkel zur Detektionsrichtung beleuchtet wird. Anstelle eines rein statischen Lichtblattes kann auch ein quasistatisches Lichtblatt verwendet werden. Dieses wird erzeugt, indem die Probe mit einem Lichtstrahl schnell abgetastet wird. Die lichtblattartige Beleuchtung entsteht, wenn der Lichtstrahl einer sehr schnellen Relativbewegung zu der zu beobachtenden Probe unterworfen wird und dabei zeitlich aufeinanderfolgend mehrfach aneinandergereiht wird. Dabei wird die Integrationszeit der Kamera, auf deren Sensor die Probe abgebildet wird, sinnvollerweise so gewählt, dass die Abtastung innerhalb der Integrationszeit abgeschlossen wird.

Die SPIM-Technik ist in der Literatur inzwischen vielfach beschrieben, beispielsweise in der DE 102 57 423 A1 und der darauf aufbauenden WO 2004/0535558 A1. Verfahren und Anordnungen, mit denen sich ein besonders dünnes Lichtblatt konstruieren lässt, sind beispielsweise in der DE 10 2012 013 163.1 beschrieben.

Bei den üblichen SPIM-Anordnungen erfolgt die Beleuchtung über ein Linsensystem, welches in der Ebene der Probe liegt, die beleuchtet wird. Wird also beispielsweise von oben beobachtet, so muss die Beleuchtung von der Seite erfolgen. Übliche Präparationstechniken können daher nicht verwendet werden. Ein weiterer wesentlicher Nachteil liegt darin, dass sowohl das Beleuchtungsobjektiv als auch das Beobachtungsobjektiv räumlich nah beieinander angeordnet werden müssen, so dass für die Detektion eine Linse mit einer hohen numerischen Apertur genutzt werden kann, welche aus einem weiten Bereich Licht einfängt. Gleichzeitig muss jedoch auch ein Lichtblatt erzeugt werden. Diese mechanischen Beschränkungen können zu einer Einschränkung der numerischen Apertur und damit der Auflösung des abbildenden Systems führen.

Um diese Beschränkungen aufzuheben, wurden SPIM-Optiken entwickelt, bei denen dasselbe Objektiv für die Beleuchtung mit einem Lichtblatt und gleichzeitig für die Detektion von Fluoreszenz, welche von der Probe kommt, verwendet wird. Dabei erfolgt die Beleuchtung der Probe mit einem Lichtblatt über einen Teilbereich des Objektivs, welcher einen Randbereich dieses Objektivs einschließt, so dass die Beleuchtung also unter einem zur optischen Achse des Objektivs schrägen Winkel erfolgt. Für die Detektion wird dann ein gegenüberliegender Randbereich des Objektivs verwendet, so dass die Detektion im Mittel ebenfalls unter einem zur optischen Achse des Objektivs von Null verschiedenen Winkel erfolgt. Aufgrund der beschränkten numerischen Apertur des Objektivs beträgt dieser Winkel in der Regel weniger als die 90°, die sonst in der klassischen SPIM-Technik üblich ist.

Ein solcher Aufbau ist beispielsweise in der US 2011/0261446 A1 beschrieben. Das Abbildungssystem wird dort um ein Übertragungssystem ergänzt, welches aus der spiegelsymmetrischen Aneinanderkopplung zweier abbildender Teilsysteme besteht. Die beiden abbildenden Systeme sind bezüglich ihrer optischen Elemente spiegelsymmetrisch angeordnet, wobei die Spiegelebene der ursprünglichen Bildebene des objektseitigen Teilsystems entspricht, bei der also der beleuchtete Bereich der Probe im Bild die Bildebene schräg schneidet. Die Vergrößerung des Übertragungssystems wird so gewählt, dass sie dem Verhältnis der Brechzahlen eines ersten Mediums, in dem sich die Probe befindet, zu einem zweiten Medium, in dem das Zwischenbild lokalisiert ist, entspricht.

Sofern keine Immersionsmedien verwendet werden, können die optischen Komponenten der beiden Teilsysteme identisch gewählt werden, sie sind jedoch spiegelverkehrt angeordnet, so dass die Abbildung im Maßstab 1:1 erfolgt.

Falls eines der beiden Teilsysteme als Immersionssystem ausgestaltet ist, sich das optische Element, welches der Probe am nächsten ist, also in einem Immersionsmedium befindet, so sollen gemäß der US 2011/0261446 A1 Vergrößerungen gewählt werden, die dem Verhältnis der Brechzahlen des objektseitigen und eines bildseitigen Mediums oder Immersionsmediums entsprechen. Mit Hilfe des - bis auf die Verwendung von Immersionsmedien symmetrischen - optischen Übertragungssystems wird also die Objektebene in ein Zwischenbild in einer Zwischenbildebene abgebildet, wobei die Zwischenbildebene wieder mit der Lichtblattebene zusammenfällt, so dass die Objektebene bezüglich der Zwischenbildebene unverzerrt und nicht vergrößert dargestellt ist.

Um nun eine vergrößerte Darstellung der Probe in der Objektebene zu erhalten, ist in der US 2011/0261446 A1 ein als Mikroskop ausgestaltetes optisches Abbildungssystem vorgesehen, welches ein Objektiv aufweist, dessen optische Achse senkrecht auf der Zwischenbildebene steht. Außerdem ist es auf die Zwischenbildebene fokussiert, die Fokusebenen des Übertragungssystems und des Abbildungssystems schneiden sich im Zentrum des Zwischenbildes. Auf diese Weise kann eine unverzerrte Abbildung der Probe, d.h. eine Abbildung frei von Aberrationen, mit einer vom Mikroskop abhängigen Vergrößerung auf einen Detektor erfolgen. Das zugrundeliegende Prinzip wird auch in der WO 2008/078083 A1 beschrieben, demnach kann unter Verwendung eines solchen Systems ein Objekt in einem gewissen Volumenbereich in einer senkrecht zur optischen Achse liegenden Bildebene komafrei und öffnungsfehlerfrei in der Tiefe abgebildet werden.

Anstelle eines aus Linsen aufgebauten, transmissiven Übertragungssystems, wie es in der US 2011/0261446 A1 verwendet wird, kann auch ein teilweise katadioptrisches, also reflexiv arbeitendes System verwendet werden. Ein solches ist beispielsweise in der nicht vorveröffentlichten DE 10 2013 105 586.9 beschrieben, damit kann die Baulänge und die Anzahl der optischen Elemente reduziert wird.

Der US 2011/0261446 A1 ist zu entnehmen, dass die Winkelverteilung der zu detektierenden Fluoreszenzstrahlen in der durch die Lichtblattbeleuchtungsrichtung und die optische Achse des Übertragungssystems aufgespannten Ebene symmetrisch relativ zur propagierten optischen Achse des optischen Abbildungssystems, welches dem Übertragungssystem nachgeschaltet ist, liegt. In der Detektionspupille liegt keine Überlappung zwischen Anregungs- und Detektionsstrahlen vor. Die numerische Apertur des optischen Abbildungssystems, welches dem Übertragungssystem nachgeschaltet ist, begrenzt außerdem das von der Probe detektierbare Winkelspektrum. Die numerische Apertur des Übertragungssystems auf der Objektseite ist dabei größer als die numerische Apertur des optischen Abbildungssystems.

Eine ähnliche Anordnung wird in der DE 10 2011 000 835 A1 beschrieben, wobei die Erzeugung des Lichtblattes hier mittels einer Abtastbewegung erzeugt wird, es sich also um ein quasistatisches Lichtblatt handelt. Auch hier ist das Winkelspektrum des Detektionsstrahlengangs symmetrisch zur optischen Achse des optischen Abbildungssystems, welches dem Übertragungssystem nachgeordnet ist, angeordnet, auch hier wird der Bereich des Winkelspektrums durch die numerische Apertur des optischen Abbildungssystems beschränkt.

### Beschreibung der Erfindung

Aufgabe der Erfindung ist es, eine Vorrichtung der eingangs beschriebenen Art dahingehend zu verbessern, dass die bei der Detektion erzielbare Auflösung mit einfachen Mitteln verbessert wird.

Diese Aufgabe wird durch die Merkmale der unabhängigen Ansprüche gelöst.

Aufgrund des asymmetrischen Detektionswinkelspektrums, welches einen größeren Winkelbereich als im Stand der Technik einschließt, kann die Auflösung der mikroskopischen Vorrichtung erhöht werden. Die Halbwertsbreite der Punktspreizfunktion des Systems wird aufgrund des größeren Bereichs, der für die Detektion des Winkelspektrums zur Verfügung steht, reduziert, jedoch wird ihr aufgrund der Asymmetrie des Detektionswinkelspektrums gleichzeitig ebenfalls eine Asymmetrie aufgeprägt. Vorzugsweise umfasst die Vorrichtung daher auch einen Detektor und eine daran angeschlossene Auswerteeinheit zur Bildbearbeitung unter Berücksichtigung einer solchen asymmetrischen Punktspreizfunktion und/oder einer aufgrund der Grenzfläche gestauchten Punktspreizfunktion. Insbesondere indem das aufgenommene Bild mit der asymmetrischen Punktspreizfunktion entfaltet wird, lassen sich im Bild vorhandene Unschärfen besser korrigieren. Jedoch erhält man auch ohne eine Entfaltung mit der Punktspreizfunktion, die nur im Rahmen einer Bildbearbeitung erfolgen kann, ein besser aufgelöstes Bild als im Stand der Technik.

Vorzugsweise schließen dabei die Objektebene und die Zwischenbildebene mit der optischen Achse des Übertragungssystems Winkel ein, deren Beträge kleiner als der Öffnungswinkel des objektseitigen bzw. des zwischenbildseitigen Detektions-Aperturkegels des Übertragungssystems sind. Die Objektebene und die Zwischenbildebene liegen außerdem mindestens teilweise im objektseitigen bzw. im zwischenbildseitigen Detektions-Aperturkegel.

Das Zwischenbild bzw. die abgebildete Lichtblattebene zwischen Übertragungssystem und optischen Abbildungssystem liegt dann innerhalb des möglichen Detektionswinkelspektrums, welches von der Apertur des Übertragungssystems und seiner Brennweite abhängt und dem Detektions-Aperturkegel entspricht. Dies führt zu einer inhärenten Asymmetrie der detektierbaren Fluoreszenzwinkelverteilung in der durch die Ausbreitungsrichtung und die optische Achse des Übertragungssystems bzw. der optischen Achse des optischen Abbildungssystems aufgespannten Ebene, also senkrecht zur Lichtblattebene. Der maximal mögliche Teilbereich des erfassbaren Fluoreszenzwinkelspektrums in der genannten Ebene wird aufgrund der Lage der Zwischenbildebene im Detektions-Aperturkegel auf der Ausgangsseite des Übertragungssystems beschränkt und ist daher asymmetrisch bezogen auf die optische Achse des Übertragungssystems.

Die beschriebene Vorrichtung zeichnet sich vorzugsweise dadurch aus, dass die Objektebene mindestens teilweise innerhalb des objektseitigen Detektions-Aperturkegels liegt und somit mit der optischen Achse des Übertragungssystems einen Winkel einschließt, dessen Betrag kleiner als der Öffnungswinkel des Detektions-Aperturkegels ist. Der objektseitige Detektions-Aperturkegel wird entsprechend durch das Übertragungssystem auf die Seite des Zwischenbildes übertragen und dort liegt entsprechend die Zwischenbildebene mindestens teilweise innerhalb des zwischenbildseitigen Detektions-Aperturkegels. Die optische Achse des Übertragungssystems schließt mit der Zwischenbildebene einen Winkel ein, dessen Betrag kleiner als der Öffnungswinkel des zwischenbildseitigen Detektions-Aperturkegels des Übertragungssystems ist. Somit dürfen in diesem Fall im Übertragungssystem keine störenden optischen Elemente angeordnet sein, die einen Teil des Detektionswinkelspektrums ausblenden könnten.

Für die Detektion beispielsweise von emittiertem Fluoreszenzlicht steht dann der gesamte Bereich der objektseitigen Apertur des Übertragungssystems zur Verfügung, so dass der Detektions-Aperturkegel des Übertragungssystems nur durch die numerische Apertur des Übertragungssystems auf der Objektseite beschränkt wird. Im Stand der Technik wird meist ein Teil des objektseitigen Objektivs des Übertragungssystems für die Einkopplung von Anregungslicht genutzt, dieser Teil des Objektivs steht für die Detektion dann nicht mehr zur Verfügung, weil beispielsweise das Beleuchtungslicht über einen Spiegel, welcher sich im Strahlengang des Übertragungssystems befindet, eingekoppelt wird. Entsprechend kann in diesem Fall der maximal mögliche, theoretisch zur Verfügung stehende Detektions-Aperturkegel, der die gesamte Apertur des objektseitigen Objektivs des Übertragungssystems ausnutzt, nicht erreicht werden. Als Konsequenz befindet sich die Objektebene und damit auch die Lichtblattebene nicht im tatsächlich möglichen Detektions-Aperturkegel, gleiche Verhältnisse herrschen auf der Zwischenbildseite, auch hier liegt dann die Zwischenbildebene außerhalb des zwischenbildseitigen Aperturkegels des Übertragungssystems. Als Konsequenz ist im Stand der Technik das Winkelspektrum symmetrisch zur optischen Achse des optischen Abbildungssystems ausgebildet, welches zudem durch die Apertur des optischen Abbildungssystems, welcher das Zwischenbild in eine Bildebene abbildet, eingeschränkt wird.

Die Zwischenbildebene ist also teilweise innerhalb des vom Übertragungssystem übertragenen - bei einer Übertragung im Maßstab 1:1 gespiegelten - Detektions-Aperturkegels lokalisiert. Das optische Abbildungssystem ist dem Übertragungssystem nachgeschaltet und in seiner optischen Achse senkrecht zu dieser Zwischenbildebene ausgerichtet. Es sammelt Fluoreszenzlicht bzw. zu detektierendes Licht innerhalb eines weiteren Detektions-Aperturkegels, nämlich des optischen Abbildungssystems ein. Da die Zwischenbildebene innerhalb des übertragenen Detektions-Aperturkegels liegt, kann das optische Abbildungssystem einen größeren Detektionswinkelbereich erfassen, als dies im Stand der Technik möglich ist, dies führt hier zwangsläufig zu einer asymmetrischen Verteilung des Detektionswinkelbereichs. Da der erfassbare Detektionswinkelbereich - wenn auch asymmetrisch - vergrößert wird, kann auf diese Weise die Auflösung insgesamt erhöht werden.

Dabei ist es vorteilhaft, einen möglichst große numerische Apertur des optischen Abbildungssystems zu wählen, insbesondere diese größer als die numerische Apertur des Übertragungssystems zu wählen, um einen möglichst großen Detektionswinkelbereich zu erfassen um die Auflösung zu maximieren.

Erfindungsgemäß ist die Vorrichtung so ausgestaltet, dass zwischen dem optischen Übertragungssystem und dem optischen Abbildungssystem ein erstes und ein zweites optisches Medium angeordnet sind. Dabei ist das erste optische Medium zwischen dem optischen Übertragungssystem und der Zwischenbildebene angeordnet und das zweite optische Medium zwischen der Zwischenbildebene und dem optischen Abbildungssystem. Die Zwischenbildebene liegt dann in der Grenzfläche zwischen erstem und zweitem optischen Medium, das zweite optische Medium hat einen höheren Brechungsindex als das erste optische Medium. Die Medien können als Flüssigkeiten, beispielsweise als Immersionsmedien ausgestaltet sein, oder auch als gelartige oder glasartige Medien, die ebenfalls die Funktion eines Immersionsmediums übernehmen können, wenn sie direkt an das optische Übertragungssystem bzw. das optische Abbildungssystem anschließen. Die Grenzfläche kann auch optisch mikrostrukturiert sein um effektiv einen größeren Sprung im Brechungsindex zu erreichen, als er für einfache Grenzflächen möglich wäre. Bei einer entsprechend hohen numerischen Apertur des optischen Abbildungssystems, bevorzugt einer größeren Apertur als die des optischen Übertragungssystems, und bei einem Brechungsindexsprung mit der Zwischenbildebene als Grenzfläche kann - aufgrund des Snelliusschen Brechungsgesetzes - der tatsächlich erfassbare Winkelbereich dem theoretisch möglichen Winkelbereich sehr stark angenähert werden, jedoch ist stets eine Asymmetrie vorhanden.

Die Einführung einer Grenzfläche geht einher mit einer Stauchung des Winkelspektrums eines Punktstrahlers, d.h. der Punktspreizfunktion, welche hier nicht als Verzerrung angesehen wird, jedoch bei einer späteren Auswertung entsprechend berücksichtigt werden muss.

### Kurze Beschreibung der Zeichnungen

### Ausführliche Beschreibung der Zeichnungen

Die vorangehend beschriebene Vorrichtung wird dazu verwendet, eine in einer Objektebene angeordnete Probe mit einem Lichtblatt zu beleuchten, wobei das Lichtblatt im Wesentlichen in der Objektebene liegt und eine Beleuchtungsrichtung festlegt, und die Normale der Objektebene eine Detektionsrichtung festlegt. Mit einem optischen Übertragungssystem wird ein Bereich der Probe von der Objektebene in eine Zwischenbildebene abgebildet, wobei die Objektebene und die Zwischenbildebene mit einer optischen Achse des Übertragungssystems einen von 90° verschiedenen Winkel einschließen. Die Zwischenbildebene wird mit einem optischen Abbildungssystem mit einem Objektiv, dessen optische Achse senkrecht auf der Zwischenbildebene steht und das auf die Zwischenbildebene fokussiert ist, unverzerrt auf einen Detektor abgebildet. Dort wird es als Bild registriert, wobei das optische Abbildungssystem (6) einen um die optische Achse (7) asymmetrisch verteilten Detektionswinkelbereich erfasst. Das registrierte Bild wird anschließend in einer mit dem Detektor (8) verbundenen Auswerteeinheit unter Berücksichtigung einer asymmetrischen Punktspreizfunktion auf Basis des asymmetrischen Detektionswinkelspektrums und/oder einer gestauchten Punktspreizfunktion bearbeitet. Zwischen dem optischen Übertragungssystem und der Zwischenbildebene ist ein erstes optisches Medium und zwischen der Zwischenbildebene und dem optischen Abbildungssystem ist ein zweites optisches Medium angeordnet. Die Zwischenbildebene liegt in der Grenzfläche zwischen erstem und zweitem optischen Medium, das zweite optische Medium hat einen höheren Brechungsindex als das erste optische Medium.

Nachfolgend wird die Erfindung beispielsweise anhand der beigefügten Zeichnungen, die auch erfindungswesentliche Merkmale offenbaren, noch näher erläutert. Es zeigen:
- Fig.1: den Aufbau einer Vorrichtung zur Abbildung einer Probe,
- Fig.2: die detektierbare Winkelverteilung vom Detektionslicht nach dem Stand der Technik,
- Fig.3: Detektionswinkelspektren für eine erste Ausgestaltung einer nicht erfindungsgemäßen Vorrichtung gemäß Fig.1,
- Fig.4: Detektionswinkelspektren für eine zweite nicht erfindungsgemäße Ausgestaltung einer solchen Vorrichtung,
- Fig.5: Detektionswinkelspektren für eine dritte Ausgestaltung einer solchen Vorrichtung.

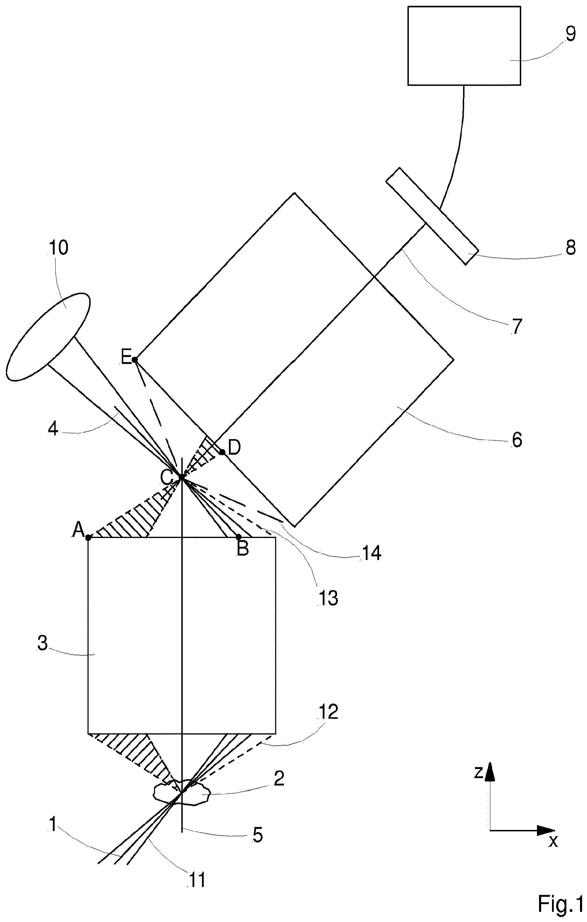

Anhand von Fig. 1 soll zunächst die grundlegende Funktionsweise der Vorrichtung zur Abbildung einer in einer Objektebene 1 angeordneten Probe 2 erläutert werden. Die Vorrichtung umfasst ein optisches Übertragungssystem 3, welches einen Bereich der Probe 2 von der Objektebene 1 in eine Zwischenbildebene 4 abbildet. Die Objektebene 1 und die Zwischenbildebene 4 schließen mit einer optischen Achse 5 des optischen Übertragungssystems 3 einen von 90° verschiedenen Winkel ein. Das optische Übertragungssystem 3 ist dabei aus mehreren Linsen aufgebaut. Beispielsweise kann es symmetrisch in Bezug auf eine Symmetrieebene zwischen den Teilsystemen senkrecht zur optischen Achse 5 des Übertragungssystems aufgebaut sein, so dass die Abbildung durch das Übertragungssystem 3 mit einem Abbildungsmaßstab von 1:1 erfolgt. In diesem Fall kann es beispielsweise auch als sogenanntes 4f-System aufgebaut sein, wobei ein jedes Teilsystem ein Objektiv und eine Tubuslinse umfasst. Es kann auch katadioptrisch aufgebaut sein, d.h. das eine oder mehrere Linsen mindestens teilverspiegelt sind, wodurch die bauliche Größe und die Anzahl der Linsen verringert werden kann. Das Übertragungssystem 3 kann auch nicht-symmetrisch aufgebaut sein, um eine entsprechend vergrößerte Abbildung in der Zwischenbildebene zu erzeugen. Dies kann auch durch die Wahl geeigneter Medien - insbesondere Immersionsmedien - auf Objekt- bzw. Zwischenbildseite erfolgen, die sich in ihren Brechzahlen unterscheiden.

Die Vorrichtung umfasst außerdem ein optisches Abbildungssystem 6 mit einem Objektiv, dessen optische Achse 7 senkrecht auf der Zwischenbildebene 4 steht und welches auf die Zwischenbildebene 4 fokussiert ist, so dass insgesamt die Objektebene 1 unverzerrt auf einen Detektor 8 abbildbar ist. An den Detektor 8 ist eine Auswerteeinheit 9 zur Bildbearbeitung angeschlossen.

Schließlich umfasst die Vorrichtung zur Abbildung der Probe 2 auch eine Beleuchtungseinrichtung 10 zur Beleuchtung der Probe 2 mit einem Lichtblatt 11. Bei der in Fig. 1 gezeigten Vorrichtung wird Beleuchtungslicht in der Zwischenbildebene 4 in den Strahlengang des Übertragungssystems 3 eingekoppelt und durch das Übertragungssystem 3 auf die Probe 2 gelenkt. Anstelle der Einkopplung in der Zwischenbildebene 4 kann auch eine Pupillenebene des Übertragungssystems 3 zur Einkopplung verwendet werden. Weiterhin ist denkbar, dass die Beleuchtung unabhängig vom Übertragungssystem direkt durch Einstrahlen im Probenraum erfolgt. Das Lichtblatt 11 wird durch das Übertragungssystem 3 auf die Probe 2 gelenkt und liegt im Wesentlichen in der Objektebene 1, auf diese Weise wird die Beleuchtungsrichtung festgelegt. Die Normale der Objektebene 1 entspricht der Detektionsrichtung. Die Beleuchtung erfolgt also in einem von Null verschiedenen Winkel zur Detektionsrichtung. Das Lichtblatt 11 liegt im Wesentlichen in der Objektebene 1, wobei der Ausdruck "im Wesentlichen" bedeutet, dass das Lichtblatt 11, wie in Fig.1 angedeutet, eine von Null verschiedene Dicke in der hier gezeigten xz-Ebene hat, die mit steigender Entfernung vom Fokuspunkt zunimmt. Die Dicke des Lichtblattes 11 wird hier durch die beiden Einhüllenden links und rechts der Objektebene 1 bzw. der Zwischenbildebene 4 dargestellt. Senkrecht zur Zeichenebene hat das Lichtblatt 11 eine wesentlich größere Ausdehnung.

Die Detektionsrichtung steht hier senkrecht auf der Objektebene 1 bzw. der Zwischenbildebene 4. Die Apertur des probenseitigen Objektivs des optischen Übertragungssystems 3 beschränkt in Zusammenwirkung mit dem Fokus den maximal möglichen Winkelbereich, in dem Emissionslicht - beispielsweise Fluoreszenzlicht, was durch das Lichtblatt angeregt wurde - detektiert werden kann. Dieser maximal mögliche Winkelbereich ist für die xz-Ebene objektseitig und zwischenbildseitig durch die kurzgestrichelten Linien gekennzeichnet, räumlich betrachtet wird durch die Apertur ein objektseitiger Detektions-Aperturkegel 12 und ein zwischenbildseitiger Detektions-Aperturkegel 13 festgelegt, dessen Schnitt in der xz-Ebene hier dargestellt ist. Das Übertragungssystem 3 ist hier symmetrisch aufgebaut, so dass der zwischenbildseitige Detektions-Aperturkegel 13 einem gespiegelten objektseitigen Detektions-Aperturkegel 12 entspricht.

Im Stand der Technik ist der Detektionswinkelbereich auf einen symmetrisch um die Detektionsachse liegenden Ausschnitt des objektseitigen Aperturkegels 12 beschränkt, welcher hier durch den schraffierten Bereich innerhalb des objektseitigen Detektions-Aperturkegels 12 und entsprechend durch einen schraffierten Bereich auf der Zwischenbildseite dargestellt ist. Im Stand der Technik hat dies seine Begründung darin, dass ein Teil des Strahlengangs für die Beleuchtung freigehalten wird und / oder dass der Detektionsstrahlengang im optischen Abbildungssystem beschränkt wird und / oder dass bei der Bildauswertung keine zusätzlichen Maßnahmen aufgrund eines asymmetrischen Detektionswinkelspektrums vorgenommen werden müssen, die Auswertung also wesentlich einfacher ist.

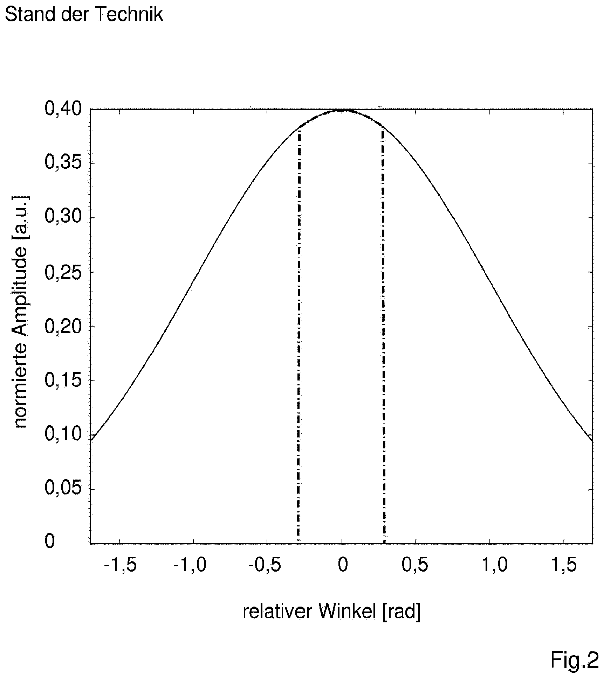

Das zugehörige Detektionswinkelspektrum, was vom optischen Abbildungssystem 6 in diesem Fall detektiert werden kann, ist in Fig.2 durch die punktgestrichelte Linie dargestellt. Die durchgezogene Linie stellt das theoretisch maximal mögliche, allein von der Apertur des Übertragungssystems 3 und / oder des optischen Abbildungssystems 6 abhängige Winkelspektrum dar. Die normierte Amplitude ist in beliebigen Einheiten (*arbitrary units*) dargestellt, auf der x-Achse ist der relative Winkel in Bezug auf die optische Achse 7 des optischen Abbildungssystems 6 in rad dargestellt. Das tatsächlich erfassbare Detektionswinkelspektrum ist hier gegenüber dem theoretisch möglichen stark beschnitten aufgrund der Forderung, dass es symmetrisch zur optischen Achse 7 des optischen Abbildungssystems 6 liegen muss.

Bei der in Fig.1 gezeigten Vorrichtung verhält es sich jedoch so, dass der objektseitige Detektions-Aperturkegel 12 dem tatsächlich maximal möglichen Aperturkegel des Übertragungssystems 3 entspricht, dessen Abmessungen allein durch die entsprechenden Daten eines objektseitigen Objektivs des Übertragungssystems 3 vorgegeben werden. Der Detektions-Aperturkegel 13 kann auch geringfügig kleiner als der maximal mögliche Aperturkegel des Übertragungssystems 3 sein. Dabei schließt die Objektebene 1 im hier gezeigten Beispiel mit der optischen Achse des Übertragungssystems 3 einen Winkel ein, dessen Betrag kleiner ist als der Öffnungswinkel des objektseitigen Detektions-Aperturkegels 12 des Übertragungssystems 3 ist und die Objektebene 1 - und damit auch die Ebene des Lichtblattes 11 - mindestens teilweise innerhalb des objektseitigen Detektions-Aperturkegels 12 liegt. Auf der Zwischenbildseite verhält es sich gleichermaßen, die Zwischenbildebene 4 schließt mit der optischen Achse 5 des Übertragungssystems 3 einen Winkel ein, dessen Betrag kleiner als der Öffnungswinkel des zwischenbildseitigen Detektions-Aperturkegels 13 des Übertragungssystems 3 ist, die Zwischenbildebene liegt mindestens teilweise innerhalb des zwischenbildseitigen Detektions-Aperturkegels 13. Dies ist in Fig.1 deutlich zu erkennen.

Die Zwischenbildebene 4 ist also innerhalb des gespiegelten Detektions-Aperturkegels 13 lokalisiert. Das optische Abbildungssystem 6 ist mit seiner optischen Achse 7 senkrecht zur Zwischenbildebene 4 ausgerichtet und sammelt Fluoreszenzlicht maximal in einem abbildungsseitigen Detektions-Aperturkegel 14 ein, welcher hier durch die lang gestrichelten Linien gekennzeichnet wird. Da Fluoreszenzlicht bzw. allgemein Emmissionslicht, welches in einem Winkel von größer als 90° relativ zur optischen Achse 7 des optischen Abbildungssystems 6 propagiert, prinzipiell nicht erfasst werden kann, wird der maximal theoretisch mögliche Teilbereich des Detektionswinkelspektrums in der xz-Ebene, der mit dem in Fig.1 gezeigten Aufbau erfasst werden kann, durch das Dreieck mit den Eckpunkten A, B und C markiert. Da die Zwischenbildebene 4 bzw. die Ebene des abgebildeten Lichtblatts 11 im potenziell möglichen zwischenbildseitigen Detektions-Aperturkegel 13 lokalisiert ist, wird der tatsächlich mögliche Teilbereich beschnitten und ist kleiner als der potenziell mögliche Teilbereich. Darüber hinaus ist dieser maximal theoretisch mögliche Teilbereich, der durch das Dreieck ABC definiert wird, asymmetrisch bezogen auf die optische Achse 5 des Übertragungssystems 3.

Der vom optischen Abbildungssystem 6 tatsächlich erfassbare Teilbereich ist mitunter noch stärker eingeschränkt als der maximal theoretisch mögliche Teilbereich. Dies hängt von der Apertur des optischen Abbildungssystems 6 ab. In jedem Fall umfasst der durch das optische Abbildungssystem 6 tatsächlich erfassbare, durch das Dreieck CDE gekennzeichnete Detektionswinkelbereich einen wesentlich größeren Winkelbereich als der symmetrische, schraffierte Kegel entsprechend dem Stand der Technik, ist jedoch asymmetrisch um die optische Achse 7 des optischen Abbildungssystems 6 verteilt. Dieser gegenüber dem Stand der Technik größere Detektionswinkelbereich resultiert in einer höheren Auflösung der Vorrichtung, auch wenn das Detektionswinkelspektrum asymmetrisch um die optische Achse 7 des optischen Abbildungssystems 6 verteilt ist.

Dabei kann der abbildungsseitige Detektions-Aperturkegel 14 weiter vergrößert werden, wenn auch die numerische Apertur des optischen Abbildungssystems 6 größer gewählt wird. Vorzugsweise ist daher die numerische Apertur des optischen Abbildungssystems 6 größer als die numerische Apertur des Übertragungssystems 3. In der Zwischenbildebene wird eine Grenzfläche eingeführt, die einen Brechungsindexsprung bewirkt. Dazu wird zwischen dem optischen Übertragungssystem 3 und der Zwischenbildebene 4 ein erstes optisches Medium angeordnet und zwischen der Zwischenbildebene 4 und dem optischen Abbildungssystem 6 ein zweites optisches Medium. Die Zwischenbildebene 4 liegt an der Grenze zwischen erstem und zweiten optischen Medium, also in der Grenzfläche. Das zweite optische Medium hat einen höheren Brechungsindex als das erste optische Medium. Die optischen Medien decken jeweils die Strahlengänge bis zum Übertragungssystem 3 bzw. optischen Abbildungssystem 6 ab, es kann sich beispielsweise um Immersionsmedien handeln, oder um gelartige Substanzen, auch Gläser sind mögliche Ausgestaltungen. Auf diese Weise kann der tatsächlich erfassbare Teilbereich dem theoretisch möglichen weitest möglich angenähert werden. In jedem Falle bleibt eine Asymmetrie, die abbildungstechnisch eine asymmetrische bzw. nicht punktsymmetrische Punktspreizfunktion für die gesamte Vorrichtung ergibt. Vorzugsweise ist die Auswerteeinheit 9 zur Bildbearbeitung geeignet unter Berücksichtigung einer asymmetrischen Punktspreizfunktion auf Basis des asymmetrischen Detektionswinkelspektrums, auf diese Weise kann die Punktspreizfunktion für die Bildauswertung herangezogen werden und im Rahmen einer Entfaltung zur Erhöhung der Schärfe beitragen. Alternativ oder ergänzend ist die Auswerteeinheit auch zur Berücksichtigung bzw. Verrechnung einer gestauchten Punktspreizfunktion geeignet, wie sie aufgrund des Snelliusschen Brechungsgesetzes an der beschriebenen Grenzfläche in der Zwischenbildebene auftritt, geeignet.

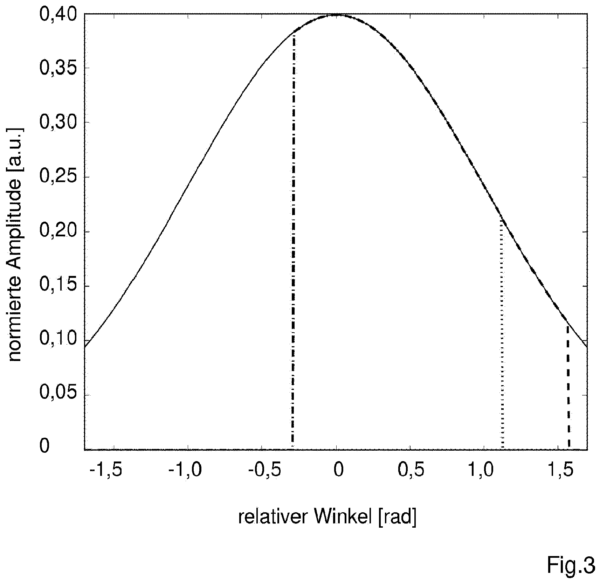

In den Fig.3-5 sind die Detektionswinkelspektren für verschiedene Konfigurationen der Vorrichtung dargestellt. Die Abbildungen zeigen jeweils einen Schnitt in der xz-Ebene durch den Amplitudenanteil des von der Probe emittierten Lichts, also des Detektionswinkelspektrums mit einer durchgezogenen Linie. Der Phasenanteil wird in diesem Fall vernachlässigt, was bei der Betrachtung von Fluoreszenzemission adäquat ist. Die Form des Detektionswinkelspektrums ist dabei willkürlich gewählt und dient nur der Veranschaulichung. Die Abszisse stellt den Winkel relativ zur optischen Achse 7 des optischen Abbildungssystems 6 dar.

Bei dem in Fig.3 dargestellten - nicht erfindungsgemäßen - Fall beträgt die numerische Apertur des optischen Übertragungssystems 3 1,2 und ist identisch zur numerischen Apertur des optischen Abbildungssystems 6. Es wurde hier nur ein Medium verwendet, nämlich Wasser mit einem Brechungsindex von 1,33. Das Übertragungssystem 3 ist symmetrisch aufgebaut und das optische Abbildungssystem 6 steht in einem Winkel von 48° zum Übertragungssystem 3 bezogen auf die optischen Achsen. Der maximal theoretisch möglich erfassbare Teilbereich des Detektionswinkelspektrums entsprechend dem Dreieck ABC in Fig.1, welcher hinter dem Übertragungssystem 3 erfasst werden kann, ist gestrichelt dargestellt. Gegenüber dem originalen Winkelspektrum ist dieser Teilbereich aufgrund der Apertur des Übertragungssystems 3 beschnitten sowie aufgrund der Tatsache, dass die Zwischenbildebene 4 innerhalb des Detektions-Aperturkegels 13 liegt, zu welcher das optische Abbildungssystem senkrecht detektieren muss. Der tatsächlich erfassbare Teilbereich entsprechende dem Dreieck CDE in Fig.1 ist in Fig. 3-5 punktiert dargestellt. Hier ergibt sich ein weiteren Beschnitt dadurch, dass mit der Apertur des optischen Abbildungssystems 6 wiederum nur ein gewisser Teilbereich umfasst werden kann, bezogen auf die optische Achse 7 des optischen Abbildungssystems 6 ist die Punktspreizfunktion des Systems asymmetrisch.

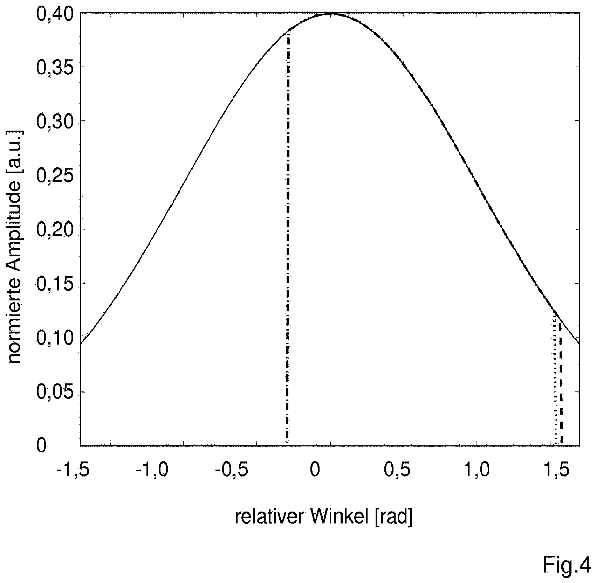

Während also der tatsächlich erfassbare Bereich gegenüber dem Stand der Technik schon vergrößert ist, kann zur Erhöhung der Auflösung versucht werden, einen noch größeren Teil des gestrichelt dargestellten, theoretisch möglichen Spektrums zu erfassen. Dieser - nicht von der Erfindung umfasste - Fall ist in Fig.4 in einer Simulation dargestellt. Die numerische Apertur des optischen Abbildungssystems 6 beträgt hier 1,329, was allerdings bei der Verwendung von Wasser als Immersionsmedium mit einem Brechungsindex von 1,33 nicht realisierbar ist, da bereits der gesamte Halbraum erfasst werden müsste und der Punkt E des Dreiecks in die Zwischenbildebene verschoben würde.

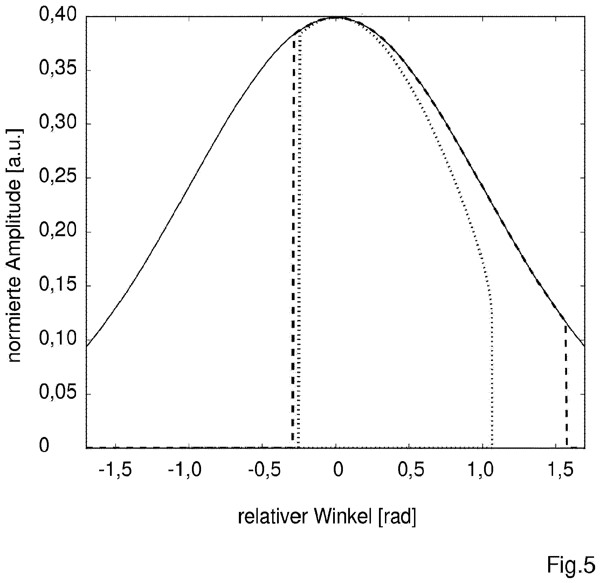

Während der Erhöhung der numerischen Apertur des optischen Abbildungssystems 6 daher Grenzen gesetzt sind, erfolgt eine Vergrößerung des tatsächlich detektierbaren Bereichs, indem in der Zwischenbildebene 4 ein Brechungsindexsprung eingeführt wird. Dies ist in Fig.5 dargestellt, hier wird als erstes Medium zwischen Übertragungssystem 3 und Zwischenbildebene 4 Wasser mit einem Brechungsindex von 1,33 verwendet und als zweites Medium zwischen der Zwischenbildebene 4 und dem optischen Abbildungssystem 6 Glas BK7 mit einem Brechungsindex von 1,52. Die numerische Apertur des optischen Abbildungssystems 6 beträgt dann 1,329 und liegt aufgrund der Medienauswahl im realisierbaren Bereich. Das theoretisch mögliche Spektrum wird dann vollständig erfasst, es wird durch die gepunktete Linie in Fig.5 dargestellt. Zu erkennen ist auch, dass es aufgrund der Snelliusschen Brechungsgesetztes gestaucht ist, jedoch nicht verzerrt. Informationen gehen auf diese Weise nicht verloren, die Stauchung muss jedoch bei einer Bildbearbeitung, bei der auch die Punktspreizfunktion berücksichtigt wird, ebenso berücksichtigt werden, wie die weiterhin vorliegende Asymmetrie. Stauchung und Punkspreizfunktion lassen sich im Rahmen einer Entfaltung berücksichtigen.

Wenn ein asymmetrisches, ggf. gestauchtes Detektionswinkelspektrum und damit einhergehend eine asymmetrisch und ebenfalls ggf. gestauchte Punktspreizfunktion bei der Detektion zugelassen werden, lässt sich die Auflösung des Gesamtsystems erhöhen.

### Bezugszeichenliste

- 1: Objektebene
- 2: Probe
- 3: optisches Übertragungssystem
- 4: Zwischenbildebene
- 5: optische Achse
- 6: optisches Abbildungssystem
- 7: optische Achse
- 8: Detektor
- 9: Auswerteeinheit
- 10: Beleuchtungseinrichtung
- 11: Lichtblatt
- 12: objektseitiger Detektions-Aperturkegel
- 13: zwischenbildseitiger Detektions-Aperturkegel
- 14: abbildungsseitiger Detektions-Aperturkegel

- A, B, C, D, E, F: Eckpunkte von Dreiecken

## Patentansprüche

1. Vorrichtung zur Abbildung einer in einer Objektebene (1) angeordneten Probe (2), umfassend
- ein optisches Übertragungssystem (3), welches einen Bereich der Probe (2) von der Objektebene (1) in eine Zwischenbildebene (4) abbildet,
- wobei die Objektebene (1) und die Zwischenbildebene (4) mit einer optischen Achse (5) des Übertragungssystems (3) einen von 90° verschiedenen Winkel einschließen und das optische Übertragungssystem (3) aus mehreren Linsen aufgebaut ist,
- ein optisches Abbildungssystem (6) mit einem Objektiv, dessen optische Achse (7) senkrecht auf der Zwischenbildebene (4) steht und welches auf die Zwischenbildebene (4) fokussiert ist, so dass die Objektebene (1) unverzerrt auf einen Detektor (8) abbildbar ist,
- eine Beleuchtungseinrichtung (10) zur Beleuchtung der Probe (2) mit einem Lichtblatt (11), wobei das Lichtblatt (11) im Wesentlichen in der Objektebene (1) liegt und eine Beleuchtungsrichtung festlegt, und die Normale der Objektebene (1) eine Detektionsrichtung festlegt,
- **dadurch gekennzeichnet, dass**
- das optische Abbildungssystem (6) eine Apertur aufweist, mit welcher ein um die optische Achse (7) des Objektivs asymmetrisch verteilter Detektionswinkelbereich erfasst und auf einen Detektor (8) abgebildet wird und
- zwischen dem optischen Übertragungssystem (3) und der Zwischenbildebene (4) ein erstes optisches Medium und zwischen der Zwischenbildebene (4) und dem optischen Abbildungssystem ein zweites optisches Medium angeordnet sind, wobei die Zwischenbildebene (4) in der Grenzfläche zwischen erstem und zweitem optischen Medium liegt und das zweite optische Medium einen höheren Brechungsindex als das erste optische Medium hat.

2. Vorrichtung nach Anspruch 1, **dadurch gekennzeichnet, dass** die Objektebene (1) und die Zwischenbildebene (4) mit der optischen Achse (5) des Übertragungssystems (3) jeweils einen Winkel einschließen, dessen Betrag kleiner als der Öffnungswinkel eines objektseitigen Detektions-Aperturkegels (12) bzw. eines zwischenbildseitigen Detektions-Aperturkegels (13) des Übertragungssystems (3) ist, und die Objektebene (1) und die Zwischenbildebene (4) teilweise innerhalb des objektseitigen Detektions-Aperturkegels (12) bzw. des zwischenbildseitigen Detektions-Aperturkegels (13) liegen.

3. Vorrichtung nach Anspruch 1 oder 2, umfassend eine an den Detektor (8) angeschlossene Auswerteeinheit (9) zur Bildbearbeitung unter Berücksichtigung einer asymmetrischen Punktspreizfunktion auf Basis des asymmetrischen Detektionswinkelspektrums und/oder einer gestauchten Punktspreizfunktion.

4. Vorrichtung nach einem der Ansprüche 1 bis 3, **dadurch gekennzeichnet, dass** die numerische Apertur des optischen Abbildungssystems (6) größer als die numerische Apertur des Übertragungssystems (3) ist.

5. Vorrichtung nach einem der Ansprüche 1 bis 4, **dadurch gekennzeichnet, dass** das Übertragungssystem (3) symmetrisch in Bezug auf eine Symmetrieebene zwischen den Teilsystemen senkrecht zur optischen Achse (5) des Übertragungssystems (3) aufgebaut ist, so dass die Abbildung durch das Übertragungssystem (3) mit einem Abbildungsmaßstab von 1:1 erfolgt, und/oder dass das Übertragungssystem (3) katadioptrisch aufgebaut ist.

6. Verfahren zur Abbildung einer in einer Objektebene (1) angeordneten Probe (2), bei dem
- die Probe mit einem Lichtblatt beleuchtet (11) wird, wobei das Lichtblatt (11) im Wesentlichen in der Objektebene (1) liegt und eine Beleuchtungsrichtung festlegt, und die Normale der Objektebene (1) eine Detektionsrichtung festlegt,
- ein Bereich der Probe (2) von der Objektebene (1) mit einem optischen Übertragungssystem (3) in eine Zwischenbildebene (4) abgebildet wird, wobei die Objektebene (1) und die Zwischenbildebene (4) mit einer optischen Achse (5) des Übertragungssystems (3) einen von 90° verschiedenen Winkel einschließen,
- die Zwischenbildebene (4) mit einem optischen Abbildungssystem (6) mit einem Objektiv, dessen optische Achse (7) senkrecht auf der Zwischenbildebene (4) steht und das auf die Zwischenbildebene (4) fokussiert ist, unverzerrt auf einen Detektor (8) abgebildet und dort als Bild registriert wird, wobei das optische Abbildungssystem (6) eine Apertur aufweist, die einen um die optische Achse (7) asymmetrisch verteilten Detektionswinkelbereich erfasst, wobei zwischen dem optischen Übertragungssystem (3) und der Zwischenbildebene (4) ein erstes optisches Medium und zwischen der Zwischenbildebene (4) und dem optischen Abbildungssystem ein zweites optisches Medium angeordnet sind, wobei die Zwischenbildebene (4) in der Grenzfläche zwischen erstem und zweitem optischen Medium liegt und das zweite optische Medium einen höheren Brechungsindex als das erste optische Medium hat,
- das registrierte Bild in einer mit dem Detektor (8) verbundenen Auswerteeinheit unter Berücksichtigung einer asymmetrischen Punktspreizfunktion auf Basis des asymmetrischen Detektionswinkelspektrums und/oder einer gestauchten Punktspreizfunktion bearbeitet wird.

7. Verfahren nach Anspruch 6, **dadurch gekennzeichnet, dass** die Objektebene (1) und die Zwischenbildebene (4) teilweise innerhalb des objektseitigen Detektions-Aperturkegels (12) bzw. des zwischenbildseitigen Detektions-Aperturkegels (13) liegen.

## Claims

1. Apparatus for imaging a sample (2) arranged in an object plane (1), comprising
- an optical transfer system (3), which images a region of the sample (2) from the object plane (1) into an intermediate image plane (4),
- wherein the object plane (1) and the intermediate image plane (4) enclose with an optical axis (5) of the transfer system (3) an angle that differs from 90° and the optical transfer system (3) is made up of a plurality of lenses,
- an optical imaging system (6) having an objective, the optical axis (7) of which is perpendicular to the intermediate image plane (4) and which is focused at the intermediate image plane (4) such that the object plane (1) is able to be imaged onto a detector (8) without distortion,
- an illumination device (10) for illuminating the sample (2) with a light sheet (11), wherein the light sheet (11) is located substantially in the object plane (1) and defines an illumination direction, and the normal of the object plane (1) defines a detection direction,
- **characterized in that**
- the optical imaging system (6) has an aperture with which a detection angle region which is asymmetrically distributed about the optical axis (7) of the objective is captured and imaged onto a detector (8) and
- a first optical medium is arranged between the optical transfer system (3) and the intermediate image plane (4) and a second optical medium is arranged between the intermediate image plane (4) and the optical imaging system, wherein the intermediate image plane (4) is located in the interface between the first and the second optical medium and the second optical medium has a greater refractive index than the first optical medium.

2. Apparatus according to Claim 1, **characterized in that** the object plane (1) and the intermediate image plane (4) enclose with the optical axis (5) of the transfer system (3) in each case an angle having an absolute value that is less than the opening angle of an object-side detection aperture cone (12) or of an intermediate-image-side detection aperture cone (13) of the transfer system (3), and the object plane (1) and the intermediate image plane (4) are located partially within the object-side detection aperture cone (12) or the intermediate-image-side detection aperture cone (13).

3. Apparatus according to Claim 1 or 2, comprising an evaluation unit (9) connected to the detector (8) for image processing while taking into account an asymmetric point spread function based on the asymmetric detection angle spectrum and/or a compressed point spread function.

4. Apparatus according to one of Claims 1 to 3, **characterized in that** the numerical aperture of the optical imaging system (6) is greater than the numerical aperture of the transfer system (3).

5. Apparatus according to one of Claims 1 to 4, **characterized in that** the transfer system (3) is set up symmetrically with respect to a plane of symmetry between the subsystems perpendicular to the optical axis (5) of the transfer system (3), with the result that the imaging through the transfer system (3) is effected at an imaging scale of 1:1, and/or that the transfer system (3) has a catadioptric design.

6. Method for imaging a sample (2) arranged in an object plane (1), wherein
- the sample is illuminated with a light sheet (11), wherein the light sheet (11) is located substantially in the object plane (1) and defines an illumination direction, and the normal of the object plane (1) defines a detection direction,
- a region of the sample (2) is imaged from the object plane (1) into an intermediate image plane (4) using an optical transfer system (3), wherein the object plane (1) and the intermediate image plane (4) enclose with an optical axis (5) of the transfer system (3) an angle that differs from 90°,
- using an optical imaging system (6) having an objective, the optical axis (7) of which is perpendicular to the intermediate image plane (4) and which is focused at the intermediate image plane (4), the intermediate image plane (4) is imaged onto a detector (8) without distortion and is registered there as an image, wherein the optical imaging system (6) has an aperture that captures a detection angle region that is asymmetrically distributed about the optical axis (7), wherein a first optical medium is arranged between the optical transfer system (3) and the intermediate image plane (4) and a second optical medium is arranged between the intermediate image plane (4) and the optical imaging system, wherein the intermediate image plane (4) is located in the interface between the first and the second optical medium and the second optical medium has a greater refractive index than the first optical medium,
- the registered image is processed in an evaluation unit connected to the detector (8) while taking into account an asymmetric point spread function based on the asymmetric detection angle spectrum and/or a compressed point spread function.

7. Method according to Claim 6, **characterized in that** the object plane (1) and the intermediate image plane (4) are located partially within the object-side detection aperture cone (12) or the intermediate-image-side detection aperture cone (13).

## Revendications

1. Arrangement pour représenter un échantillon (2) disposé dans un plan d'objet (1), comprenant
- un système de transmission optique (3) qui représente une zone de l'échantillon (2) par le plan d'objet (1) dans un plan d'image intermédiaire (4),
- le plan d'objet (1) et le plan d'image intermédiaire (4) formant un angle différent de 90° avec un axe optique (5) du système de transmission (3) et le système de transmission optique (3) étant constitué de plusieurs lentilles,
- un système de représentation optique (6) comprenant un objectif dont l'axe optique (7) est perpendiculaire au plan d'image intermédiaire (4) et dont la mise au point est effectuée sur le plan d'image intermédiaire (4), de sorte que le plan d'objet (1) peut être représenté sans distorsion sur un détecteur (8),
- un dispositif d'éclairage (10) destiné à éclairer l'échantillon (2) avec une feuille de lumière (11), la feuille de lumière (11) se trouvant sensiblement dans le plan d'objet (1) et fixant une direction d'éclairage, et la normale du plan d'objet (1) fixant une direction de détection,
- **caractérisé en ce que**
- le système de représentation optique (6) possède une ouverture avec laquelle une plage angulaire de détection, distribuée de manière asymétrique autour de l'axe optique (7) de l'objectif, est couverte et représentée sur un détecteur (8) et
- un premier milieu optique est disposé entre le système de transmission optique (3) et le plan d'image intermédiaire (4) et un deuxième milieu optique est disposé entre le plan d'image intermédiaire (4) et le système de représentation optique, le plan d'image intermédiaire (4) se trouvant dans l'interface entre le premier et le deuxième milieu optique et le deuxième milieu optique ayant un indice de réfraction supérieur à celui du premier milieu optique.

2. Arrangement selon la revendication 1, **caractérisé en ce que** le plan d'objet (1) et le plan d'image intermédiaire (4) forment respectivement un angle avec l'axe optique (5) du système de transmission (3), dont la valeur est inférieure à l'angle d'ouverture d'un cône d'ouverture de détection côté objet (12) ou d'un cône d'ouverture de détection côté image intermédiaire (13) du système de transmission (3), et le plan d'objet (1) et le plan d'image intermédiaire (4) se trouvent partiellement à l'intérieur du cône d'ouverture de détection côté objet (12) ou du cône d'ouverture de détection côté image intermédiaire (13).

3. Arrangement selon la revendication 1 ou 2, comprenant une unité d'interprétation (9) raccordée au détecteur (8) servant au traitement d'image en tenant compte d'une fonction d'étalement de point asymétrique sur la base du spectre d'angle de détection asymétrique et/ou d'une fonction d'étalement de point écrasée.

4. Arrangement selon l'une des revendications 1 à 3, **caractérisé en ce que** l'ouverture numérique du système de représentation optique (6) est supérieure à l'ouverture numérique du système de transmission (3).

5. Arrangement selon l'une des revendications 1 à 4, **caractérisé en ce que** le système de transmission (3) est structuré symétriquement en référence à un plan de symétrie entre les systèmes partiels perpendiculairement à l'axe optique (5) du système de transmission (3), de sorte que la représentation par le système de transmission (3) s'effectue avec une échelle de représentation de 1:1, et/ou **en ce que** le système de transmission (3) est de structure catadioptrique.

6. Procédé pour représenter un échantillon (2) disposé dans un plan d'objet (1), avec lequel
- l'échantillon est éclairé avec une feuille de lumière (11), la feuille de lumière (11) se trouvant sensiblement dans le plan d'objet (1) et fixant une direction d'éclairage, et la normale du plan d'objet (1) fixant une direction de détection,
- une zone de l'échantillon (2) est représentée dans un plan d'image intermédiaire (4) par le plan d'objet (1) avec un système de transmission optique (3), le plan d'objet (1) et le plan d'image intermédiaire (4) formant un angle différent de 90° avec un axe optique (5) du système de transmission (3),
- le plan d'image intermédiaire (4) est représenté sans distorsion sur un détecteur (8) avec un système de représentation optique (6) comprenant un objectif dont l'axe optique (7) est perpendiculaire au plan d'image intermédiaire (4) et dont la mise au point est effectuée sur le plan d'image intermédiaire (4), et y est enregistré en tant qu'image, le système de représentation optique (6) possédant une ouverture qui couvre une plage angulaire de détection, distribuée de manière asymétrique autour de l'axe optique (7), un premier milieu optique étant disposé entre le système de transmission optique (3) et le plan d'image intermédiaire (4) et un deuxième milieu optique étant disposé entre le plan d'image intermédiaire (4) et le système de représentation optique, le plan d'image intermédiaire (4) se trouvant dans l'interface entre le premier et le deuxième milieu optique et le deuxième milieu optique ayant un indice de réfraction supérieur à celui du premier milieu optique
- l'image enregistrée est traitée dans une unité d'interprétation reliée au détecteur (8) en tenant compte d'une fonction d'étalement de point asymétrique sur la base du spectre d'angle de détection asymétrique et/ou d'une fonction d'étalement de point écrasée.

7. Procédé selon la revendication 6, **caractérisé en ce que** le plan d'objet (1) et le plan d'image intermédiaire (4) se trouvent partiellement à l'intérieur du cône d'ouverture de détection côté objet (12) ou du cône d'ouverture de détection côté image intermédiaire (13) .
